# EUROPÄISCHE PATENTSCHRIFT

(11) **EP 0 430 138 B1**
(45) Veröffentlichungstag und Bekanntmachung des Hinweises auf die Patenterteilung: **27.10.1993**
(21) Anmeldenummer: 90122547.4
(22) Anmeldetag: 26.11.1990
(51) Int. Cl.: H05B 6/02, H05B 6/22

(54) **Zylindrischer Hochtemperatur-Induktionsofen**
Cylindrical high-temperature induction furnace
Four à induction cylindrique à haute température

(30) Priorität: 30.11.1989 LU 87628
(43) Veröffentlichungstag der Anmeldung: 05.06.1991
(73) Patentinhaber: EUROPÄISCHE ATOMGEMEINSCHAFT (EURATOM), L-2920 Luxembourg (LU)
(72) Erfinder: Bolsch, Dietmar, NL-1826 AG Alkmaar (NL)
(74) Vertreter: Weinmiller, Jürgen

(56) Entgegenhaltungen:
- BE-A- 786 501
- DE-B- 1 300 185
- DE-B- 1 583 413
- FR-A- 2 404 371
- US-A- 1 997 741
- US-A- 3 705 285

## Beschreibung

Die Erfindung bezieht sich auf einen zylindrischen Hochtemperatur-Induktionsofen für uniaxiale Tests in Luft und oberhalb von 1000°C an elektrisch isolierenden Materialien, mit einem Hochfrequenzgenerator zur Erzeugung eines Hochfrequenzfeldes und einem zylinderrohrförmigen Suszeptor aus einem elektrisch leitenden Material, der durch das Induktionsfeld erwärmt wird und seinerseits die in ihm anzuordnenden Testmaterialien durch Strahlung erwärmt.

Die Hochfrequenz-Induktionsheizung wird seit Jahren zur Erwärmung metallischer Materialien eingesetzt. Sie ermöglicht eine schnelle Aufheizung einer Probe. Wenn jedoch die Probe aus elektrisch isolierendem Materialien, z.B. Keramiken wie Aluminiumoxid oder Siliciumnitrid besteht, ist eine direkte Aufheizung von Raumtemperatur aus wegen des hohen elektrischen Widerstands nicht möglich. In diesem Fall verwendet man daher einen elektrisch leitenden Übertrager oder Suszeptor, der seinerseits die zu erwärmende Probe umschließt und diese durch Wärmestrahlung aufheizt.

Für uniaxiale Tests, zu denen z.B. Ermüdungstests oder Kriechversuche gehören, wird die Probe in den rohrförmigen Suszeptor eingebracht und dann mit ihren beiden Enden in ein Prüfgerät eingespannt, das die gewünschten mechanischen Belastungen erzeugt. Die Probe muß zu diesem Zweck zu beiden Seiten aus dem Suszeptor sowie den ganzen Ofen vorstehen, damit man sie an das Prüfgerät anschließen kann.

Aufgabe der Erfindung ist es, einen Ofen der eingangs genannten Art so auszugestalten, daß nicht mehr die Probe zusammen mit dem Ofen in das Prüfgerät eingebaut werden muß, sondern der Ofen nachträglich in das mit der Probe versehene Prüfgerät eingesetzt werden kann, ohne daß dafür ein zusätzlicher Freiraum für die Montage zu beiden Seiten des Ofens benötigt wird.

Diese Aufgabe wird durch den im Anspruch 1 gekennzeichneten Ofen gelöst.

Bezüglich von Merkmalen bevorzugter Ausführungsformen dieses Ofens wird auf die Unteransprüche verwiesen.

Nachfolgend wird die Erfindung anhand eines bevorzugten Ausführungsbeispiels mit Hilfe der Zeichnungen näher erläutert.

Figur 1 zeigt in perspektivischer Darstellung die Bauteile eines erfindungsgemäßen Ofens.

Figur 2 zeigt ein Prüfgerät, an dem eine Hälfte des erfindungsgemäßen Ofens bereits montiert ist.

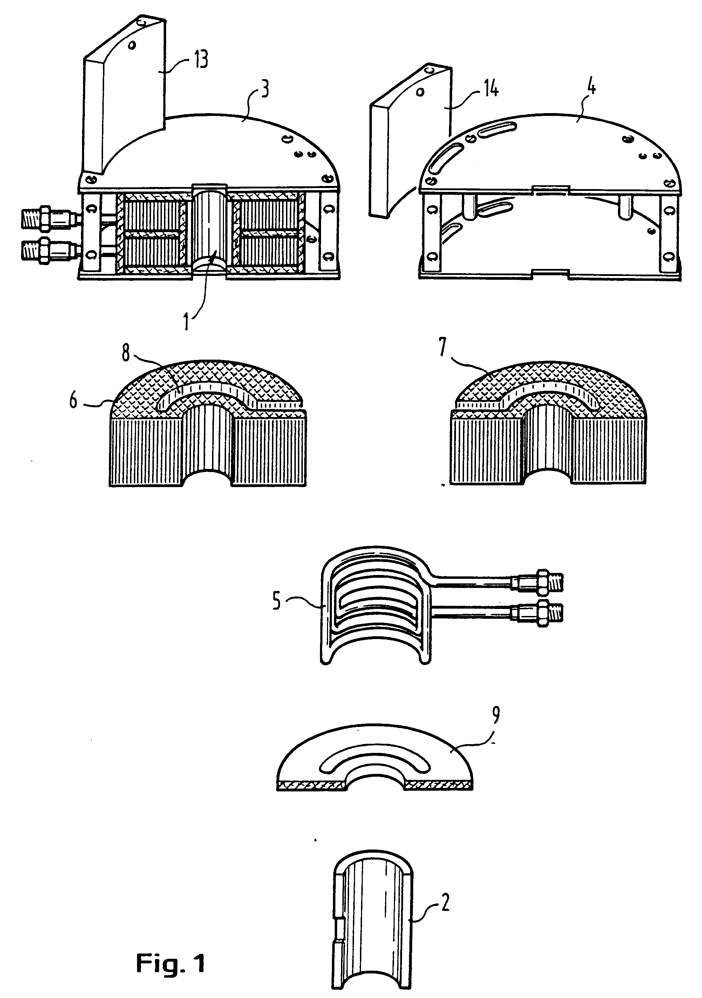

Der Ofen, dessen Komponenten in Figur 1 dargestellt sind, verwendet das Prinzip einer indirekten Hochfrequenzheizung einer Probe (nicht dargestellt), die in ein aus zwei Halbrohren 1, 2 bestehendes Suszeptorrohr eingebracht wird. Der Suszeptor besteht beispielsweise aus Siliciumkarbid oder (für noch höhere Temperaturen) aus Zirkoniumborid ZrB₂.

Wie Figur 1 zeigt, läßt sich der Ofen aus zwei völlig gleichen Hälften zusammensetzen, wobei eine Hälfte links oben in der Figur zusammengebaut dargestellt ist, d.h. fertig zum Einbau in ein Prüfgerät, während die Komponenten der anderen Hälfte einzeln dargestellt sind. Das Grundkonzept der Erfindung besteht darin, den Ofen und alle seine Komponenten entlang einer Ebene teilbar zu gestalten, die durch die Achse des Suszeptorrohrs 1, 2 und durch die Achse der in diesem anzubringenden Probe verläuft. Mit diesem Konzept ist es möglich, zuerst die Probe in das Prüfgerät einzubauen und dann den Ofen von beiden Seiten um die Probe herum zu montieren.

Der Ofen wird mechanisch durch ein Chassis zusammengehalten, das aus zwei Halbchassis 3 und 4 besteht, die wiederum je eine halbkreisförmige Bodenplatte und eine mit dieser über Stege verbundene Deckplatte aufweisen. In den Zwischenraum zwischen den beiden Platten werde die aktiven Komponenten des Ofens eingebaut, wobei alle Fugen zwischen diesen Komponenten mit einem nachgiebigen Filz aus Keramikfasern gefüllt werden, so daß unterschiedliche Ausdehnungen der Komponenten nicht zu deren Bruch führen. Durch die Filzlagen werden die Komponenten leicht gepreßt, so daß sie ohne zusätzliche Maßnahmen, wie Schrauben oder Kleben, im Chassis gehalten werden.

Wie die rechte Hälfte der Figur 1 zeigt, gehören zu den Komponenten einer Ofenhälfte ein halbes Suszeptorrohr 2, eine ganze Hochfrequenzspule 5 und zwei Spulenträgerhalbscheiben 6 und 7. Die Spule 5 wird von einem Hochfrequenzgenerator 16 gespeist. Sie verläuft in einer halben Mantelfläche eines Kreiszylinders und besitzt im eingebauten Zustand eine Achse, die senkrecht zur Achse des Rohres 2 verläuft. Die Spule besteht aus einem wassergekühlten Kupferrohr und wird lose in einen Hohlraum 8 in eine der Spulenträgerhalbscheiben, z.B. 6, eingelegt. Der Hohlraum ist so gestaltet, daß auch die Spulenzuleitungen seitlich darin Platz finden. Auch im Bereich der Ofenachse besitzt der Träger eine Aussparung, in die lose das halbe Suszeptorrohr eingelegt wird.

Die Spulenträger besitzen eine wabenförmige Struktur und halten sowohl die hohe Ofeninnentemperatur als auch die großen Temperaturgradienten nach außen ohne Zwangskühlung aus. Auch besteht keine Gefahr von Rissen in der Struktur aufgrund der hohen Aufheizgeschwindigkeit, da die Wabenwände sehr dünn sind.

Als nächstes werden Filzmatten 9 auf die Spulenträgerhalbscheiben 6 aufgelegt. Diese Filzmatten sind so ausgestaltet, daß sie für die Spule und den Suszeptor Platz lassen. Die Dicke der Filzschicht richtet sich nach der gewünschten Länge des Ofens, d.h. des Suszeptorrohrs, derart, daß die Anordnung, wenn die zweite Spulenträgerhalbscheibe 7 oben aufgesetzt wird, gerade in das Halbchassis 4 hineinpaßt.

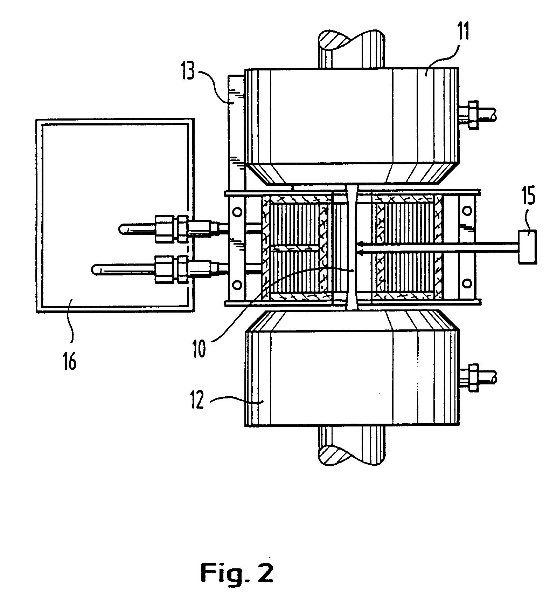

Die linke Hälfte in Figur 1 ist bereit zum Einbau in ein Prüfgerät. Figur 2 zeigt einen Ausschnitt aus diesem Gerät, das nicht Bestandteil der Erfindung ist. Eine Belastungsprobe 10 ist zwischen zwei mit Kühlköpfen 11, 12 versehenen und durch diese verdeckten Spannköpfen des Prüfgeräts eingespannt. Der halbe Ofen ist, wie in Figur 1 zu sehen, mit einem nach oben ragenden Haltearm 13 versehen, der eine hängende Befestigung des Ofens am oberen Kühlkopf 11 erlaubt, sowie weiterhin der Ausrichtung der Ofenlängsachse in Bezug auf die Probenlängsachse dient.

Die zweite Hälfte des Ofens wird nach ihrem Zusammenbau in gleicher Weise über einen entsprechenden Haltearm 14 (Figur 1) am Kühlkopf 11 befestigt und mit der ersten Hälfte verschraubt. Man erkennt aus Figur 2, daß ein Zugriff zum Spannkopf, an dem die Probe eingespannt ist, nicht gegeben und auch nicht erforderlich ist, da der Ofen erst nach der Montage der Probe hinzugefügt wird. Nach der Montage des Ofens werden die Spulenenden an einen Hochfrequenzgenerator 16 und an einen Kühlkreislauf angeschlossen.

Es ist auch möglich, durch die Wabenstruktur hindurch Thermoelemente in den Ofen hineinzuführen oder auch Kanäle für die Durchführung von Meßarmen eines Extensometers 15 (Figur 2) oder auch einen Beobachtungskanal für ein Pyrometer vorzusehen oder zur direkten optisch-mikroskopischen Beobachtung der Probenoberfläche (z.B. Ermüdungsrißwachstumsversuche).

Die Erfindung ist nicht in allen Einzelheiten auf das dargestellte Ausführungsbeispiel beschränkt. Dies gilt insbesondere bezüglich der Art des Prüfgeräts und der Instrumentierung des Ofens. Das Suszeptorrohr kann Zylinderform, wie dargestellt, besitzen, oder auch einen speziell für konstanten Temperaturverlauf entlang der Ofenachse ausgebildeten variablen Innendurchmesser aufweisen. Weiterhin ist der Ofen nicht nur für isothermische Versuche geeignet, sondern es sind auch thermozyklische oder kombiniert thermo-mechanische Versuchsführungen möglich.

## Patentansprüche

1. Zylindrischer Hochtemperatur-Induktionsofen für uniaxiale Tests in Luft und oberhalb 1000°C an elektrisch isolierenden Materialien mit einem Hochfrequenzgenerator (16) zur Erzeugung eines HF-Felds und einem zylinderförmigen Suszeptor (1,2) aus einem elektrisch leitenden Material, der durch das Induktionsfeld erwärmt wird und seinerseits die in ihm anzuordnenden Testmaterialien durch Strahlung erwärmt,
dadurch gekennzeichnet, daß der HF-Generator (16) zwei voneinander unabhängige, elektrisch parallelgeschaltete Spulen (5) speist, die je in einer zur Zylinderachse koaxialen halbzylindrischen Mantelfläche liegen, und daß auch der Suszeptor (1,2) aus zwei Halbrohren (1,2) zusammengefügt ist, wobei die Schnittebenen der halbzylindrischen Mantelflächen und der Halbrohre zusammenfallen und die Ofenachse einschließen.

2. Hochtemperatur-Ofen nach Anspruch 1, dadurch gekennzeichnet, daß die Spulenachsen senkrecht zu den Schnittebenen und durch die Ofenachse verlaufen.

3. Hochtemperatur-Ofen nach einem der Ansprüche 1 und 2, dadurch gekennzeichnet, daß die Spulen (5) je in ihnen angepaßten Hohlräumen (8) mindestens eines wabenförmigen Trägers (6, 7) aus Keramikmaterial eingebettet sind.

4. Hochtemperatur-Ofen nach einem der Ansprüche 1 bis 3, dadurch gekennzeichnet, daß die Komponenten des Ofens in ein Metallchassis (3, 4) eingebaut sind, das aus zwei entlang der Schnittebene des Suszeptors (1, 2) zusammengefügten Hälften besteht.

5. Hochtemperatur-Ofen nach einem der Ansprüche 1 bis 3, dadurch gekennzeichnet, daß in Fugen zwischen den einzelnen Komponenten des Ofens Filzschichten (9) aus Keramikfasern zum Ausgleich von thermisch bedingten Maßänderungen vorgesehen sind.

## Claims

1. A cylindrical high temperature induction furnace for uniaxial test in air and above 1000°C for electrically insulating materials, comprising a high frequency generator (16) for generating a high frequency field and a susceptor (1, 2) in the shape of a cylindrical tube made from an electrically conductive material, which is heated by the induction field and which itself heats by radiation the test materials to be disposed therein,
characterized in that the high frequency generator (16) feeds two mutually independent coils (5) which are electrically parallel-connected and are each disposed in a half-cylindrical plane which is coaxial to the cylinder axis, and that also the susceptor (1, 2) is made of two half tubes (1, 2), the intersection planes of the half-cylindrical plane and of the half-tubes coinciding and including the furnace axis.

2. A high temperature furnace according to claims 1, characterized in that the coil axes run perpendicularly to the intersection planes and through the furnace axis.

3. A high temperature furnace according to one of claims 1 and 2, characterized in that the coils (5) are embedded each in fitted cavities (8) of at least one honeycomb-type carrier (6, 7) made of ceramic material.

4. A high temperature furnace according to one of claims 1 to 3, characterized in that the elements of the furnace are mounted in a metal chassis (3, 4) consisting of two halves which are joined along the intersection plane of the susceptor (1, 2).

5. A high temperature furnace according to one of claims 1 to 3, characterized in that in the interstices between the different elements of the furnace felt layers (9) of ceramic fibres are provided for compensating size changes due to thermal effects.

## Revendications

1. Four inductif cylindrique à haute température pour des tests uniaxiaux dans l'air et au-dessus de 1000°C sur des matériaux électriquement isolants, le four comprenant un générateur haute fréquence (16) pour la génération d'un champ haute fréquence et un suscepteur (1, 2) en forme de cylindre en un matériau électriquement conducteur, qui est chauffé par le champ d'induction et de son côté chauffe par rayonnement les matériaux de test qu'on y dispose,
caractérisé en ce que le générateur haute fréquence (16) alimente deux bobines (5) indépendantes l'une de l'autre mais connectées électriquement en parallèle, qui sont disposées respectivement le long d'un demi-cylindre coaxial à l'axe du cylindre, et que le suscepteur (1, 2) lui aussi est assemblé de deux demi-tubes (1, 2), les plans d'interface des demi-cylindres et des demi-tubes coïncidant et enfermant l'axe du four.

2. Four à haute température selon la revendication 1, caractérisé par le fait que les axes de bobine s'étendent perpendiculairement aux plans d'interface et passent par l'axe du four.

3. Four à haute température selon l'une des revendications 1 et 2, caractérisé en ce que les bobines (5) sont logées dans des cavités (5) adaptées d'au moins un support céramique en nid d'abeille (6, 7).

4. Four à haute température selon l'une des revendications 1 à 3, caractérisé en ce que les composants du four sont assemblés dans un châssis (3, 4) métallique qui est composé de deux moitiés joints le long du plan d'interface du suscepteur (1, 2).

5. Four à haute température selon l'une des revendications 1 à 3, caractérisé en ce que dans les interspaces entre les composants du four on dispose des couches de feutre (9) en fibres céramiques pour équilibrer des variations géométriques dues à des variations thermiques.
